(19) Europäisches Patentamt
European Patent Office
Office européen des brevets

(11) EP 3 750 172 B1

(12) **EUROPÄISCHE PATENTSCHRIFT**

(45) Veröffentlichungstag und Bekanntmachung des Hinweises auf die Patenterteilung:
**22.03.2023 Patentblatt 2023/12**

(21) Anmeldenummer: **19703681.7**

(22) Anmeldetag: **05.02.2019**

(51) Internationale Patentklassifikation (IPC):
***G21F 9/02*** *(2006.01)* ***G21F 9/32*** *(2006.01)*
***G21F 9/28*** *(2006.01)* ***B01D 7/00*** *(2006.01)*
***G21F 9/30*** *(2006.01)*

(52) Gemeinsame Patentklassifikation (CPC):
**G21F 9/28; B01D 7/00; G21F 9/02; G21F 9/30; G21F 9/32**

(86) Internationale Anmeldenummer:
**PCT/EP2019/052701**

(87) Internationale Veröffentlichungsnummer:
**WO 2019/149951 (08.08.2019 Gazette 2019/32)**

(54) **VERFAHREN ZUR TRENNUNG VON CÄSIUM UND TECHNETIUM**

PROCESS FOR THE SEPARATION OF CESIUM AND TECHNETIUM

PROCÉDÉ DE SÉPARATION DE CESIUM ET DE TÉCHNETIUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.02.2018 DE 102018102510**

(43) Veröffentlichungstag der Anmeldung:
**16.12.2020 Patentblatt 2020/51**

(73) Patentinhaber: **Kerntechnische Entsorgung Karlsruhe GmbH**
**76344 Eggenstein-Leopoldshafen (DE)**

(72) Erfinder:
- **STROHMER, Franz**
  **76344 Eggenstein-Leopoldshafen (DE)**
- **KLIPFEL, Marco**
  **76344 Eggenstein-Leopoldshafen (DE)**
- **BAHL, Sebastian**
  **76344 Eggenstein-Leopoldshafen (DE)**

(74) Vertreter: **Ter Meer Steinmeister & Partner Patentanwälte mbB**
**Nymphenburger Straße 4**
**80335 München (DE)**

(56) Entgegenhaltungen:
**WO-A1-01/95342**
**US-A- 5 787 353**
**US-A1- 2004 124 097**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 750 172 B1

## Beschreibung

Die vorliegende Erfindung betrifft ein Verfahren zur Trennung von Cäsium und Technetium aus radioaktiven Stoffgemischen und eine Vorrichtung zur Durchführung des Verfahrens.

## Stand der Technik

Bei der Aufarbeitung von abgebrannten Brennelementen aus Reaktoren der zivilen oder militärischen Nutzung fallen hochradioaktive Abfalllösungen (High Active Waste Concentrate, HAWC; High-level Waste, HLW bzw. HLLW und HAW) an, welche die Spaltprodukte, meistens gelöst in salpetersaurer Lösung, enthalten. Nach derzeitigem Stand der Technik besteht eine Möglichkeit, diese Abfälle in geeigneter endlagerfähiger Form zu konditionieren darin, sie fest in eine Glasmatrix einzubinden (Verglasung). Dabei werden die Abfälle in einer konzentrierten Form auf eine Glasschmelze gegeben und im Folgenden sicher im entstehenden Abfallglas immobilisiert. Abgefüllt in Edelstahlkanister sind die hochradioaktiven Abfälle in dieser Form für eine Endlagerung in tiefen geologischen Gesteinsformationen geeignet.

Die kurzlebigen und gasförmigen Spaltprodukte mit Halbwertszeiten von unter einem Jahr (z.B. Iod-131) spielen für die Endlagerung und die radioaktive Aktivität kaum eine Rolle, da diese Nuklide bereits während der Zeit der Aufarbeitung und Lagerung komplett zerfallen oder ausgegast sind. Die sehr langlebigen Nuklide mit Halbwertszeiten von mehr als 10 000 Jahren wie etwa Technetium-99 (Tc-99, 211500 Jahre Halbwertszeit) machen einen langfristigen sicheren Einschluss der Glaskokillen im Endlager nötig, da deren Radioaktivität nur langsam abklingt. Ihr Beitrag zur Gesamtradioaktivität der HAWC-Lösung und der Kokillen ist jedoch gering, da diese Nuklide nur mit geringen Zerfallsraten zerfallen. Ganz entscheidend dagegen sind die Nuklide Cäsium-137 (Cs-137) und Strontium-90 (Sr-90), die mit Halbwertszeiten von 30 Jahren bzw. 28,9 Jahren vergleichsweise schnell zerfallen und daher maßgeblich zur Gesamtradioaktivität der HAWC-Lösung und der Glaskokillen beitragen.

Die Nuklide des Cäsiums (also z.B. Cs-137, Cs-133, Cs-134, Cs-135) haben zudem die Eigenschaft, unter bestimmten Voraussetzungen zusammen mit dem Spaltprodukt Tc-99 Cäsiumpertechnetat ($CsTcO_4$) zu bilden. Dieses geschieht vor allem in Wiederaufarbeitungsanlagen unter oxidierenden Bedingungen in Lösungen mit Salpetersäure. Cäsiumpertechnetat gilt allerdings aufgrund seiner hohen Wasserlöslichkeit als auch seiner hohen Wasserdampfflüchtigkeit als äußerst problematisch für die Endlagerung. Zudem besitzt es stark oxidierende Eigenschaften und eine hohe thermische Flüchtigkeit. So wurde beobachtet, dass Cäsiumpertechnetat während des Verglasungsprozesses beim Eindosieren der HAWC-Lösung in die Glasschmelze sich unerwünschter Weise aus dieser verflüchtigt und sich an kalten Stellen des Abgassystems abscheidet und dieses damit teilweise zusetzt. Die Bildung von Cäsiumpertechnetat in der Verglasungsanlage wird daher allgemein versucht zu vermeiden.

Dem Problem des in der Verglasungsanlage abgeschiedenen Cäsiumpertechnetats wurde bisher regelmäßig dadurch begegnet, dass sich das beim Verglasen von HAWC-Lösungen z.B. bei Temperaturen der Glasschmelze von über 600 °C gebildete und im Abgassystem abgeschiedene Cäsiumpertechnetat mechanisch oder durch Lösen mit Wasser/Säure entfernt wird und so die entwichenen Nuklide Cäsium und Technetium dem Verglasungsprozess wieder zugeführt werden. Diese Maßnahmen erbringen jedoch häufig unbefriedigende Ergebnisse, und ihre Wirksamkeit ist meist nur von kurzer Dauer.

Das erneute Zudosieren dieser Lösungen oder Feststoffe mit erhöhtem Cäsiumpertechnetat-Gehalten löst allerdings das Problem nicht nachhaltig, da auf Grund der hohen Flüchtigkeit bei höherer Cäsiumeintragskonzentration auch eine erhöhte Abscheidung im Abgassystem der Verglasungsanlage resultiert. Der Verglasungsdauerbetrieb führt bei den meisten Verglasungsanlagen folglich langfristig zu einer Anreicherung des Cäsiums im Abgassystem. Man geht davon aus, dass im Durchschnitt ca. 15% des Cäsiuminventars und mindestens genauso viel des Technetium-99-inventars nicht dem Glasprodukt zugeführt werden. Dieses technische Problem besteht weltweit im Prinzip bei allen HAWC-Verglasungsanlagen. Hinzu kommt, dass Pertechnetate (d.h. Technetiumverbindungen in der Oxidationsstufe VII) auch im fertigen Glas der Kokille durchaus problematisch sind. Sie werden nämlich im Gegensatz zu niedrigeren Oxidationsstufen (z.B. in der Oxidationsstufe IV in TcOz) aus der erstarrten Glasschmelze mit Wasser leicht ausgelaugt.

Die DE 26 09 223 beschreibt ein Verfahren zur Herstellung wässriger Lösungen von radioaktivem Pertechnetat. Die Abtrennung von Technetium von Molybdän-99 erfolgt allerdings über eine Säule. Cäsium wird gar nicht erwähnt.

Die WO 97/37995 beschreibt ein Verfahren zur Trennung von Pertechnetat aus radioaktivem Abfall. Allerdings erfolgt die Trennung durch Komplexbildner wie Calixpyrrole und andere Makrozyklen.

Die WO 01/95342 betrifft ein Verfahren zur Behandlung von radioaktivem Abfall, das unter anderem die Reduktion von oxidischen Technetiumverbindungen mit Hydrazin umfasst. Allerdings beschreibt das Dokument nicht die Abtrennung von Cäsium und Technetium durch die Sublimation von Cäsiumpertechnetat.

Die US 5,185,104 beschreibt ein Verfahren zur Behandlung von radioaktivem Abfall bei Temperaturen zwischen 500 °C und 3000 °C. Dabei werden verschiedene oxidische Substanzen fraktioniert durch Vakuumdestillation getrennt. Die Sublimation von Cäsiumpertechnetat wird nicht beschrieben, genauso wenig die Trennung der Nuklide Cäsium und Technetium über das isolierte Cäsiumpertechnetat.

Es besteht daher weiterhin ein Bedarf an einer verbesserten Konditionierung und Endlagerung von radioaktiven Abfällen, welche die oben genannten Probleme zuverlässig überwindet.

Die der vorliegenden Erfindung zugrundeliegende Aufgabe ist daher die Bereitstellung eines verbesserten Verfahrens zur Aufarbeitung von radioaktiven Reststoffen.

Diese Aufgabe wurde überraschend durch das erfindungsgemäße Verfahren und die erfindungsgemäße Vorrichtung gemäß den nachstehenden Ansprüchen gelöst. Die Vorrichtung ist bevorzugt für die Durchführung des Verfahrens geeignet und entsprechend daran angepasst.

Es wurde überraschend gefunden, dass eine idealerweise vollständige Abtrennung der Nuklide Cäsium und Technetium aus radioaktivem Abfall eine verbesserte Endlagerung des Restabfalls erlaubt. Zudem zeigte sich überraschender Weise, dass die abgetrennten Nuklide in verschiedenen technischen Gebieten, beispielsweise als Strahlenquelle in der Medizintechnik und als Neutronenbarriere, wiederverwendet werden können.

**Figuren**

Figur 1 zeigt eine Gaskühlereinheit von drei in Reihe geschalteten Gaskühlern gemäß einer bevorzugten Ausführungsform der Erfindung.

Figur 2 zeigt eine besonders bevorzugte Gaskühleranordnung gemäß der vorliegenden Erfindung, welche zwei Gaskühlereinheiten enthält, die jeweils drei in Reihe geschaltete Gaskühler (Kühlzonen) aufweisen. Dabei sind die zwei Gaskühlereinheiten derartig parallel geschaltet, dass sie abwechselnd a) zur Abscheidung von Cäsiumpertechnetat aus dem Abgasstrom und b) zur Gewinnung des abgeschiedenen Cäsiumpertechnetats verwendet werden und so einen kontinuierlichen Betrieb z.B. im Abgasstrom einer Verglasungseinrichtung erlauben.

Figur 3 zeigt ein Gefäß, das für die Abtrennung von Cäsiumpertechnetat aus trockenen Rückständen aus der Wiederaufarbeitung von Kernbrennstoffen oder aus dem Verglasungsverfahren sowie anderen Eintrocknungsrückständen aus HAWC-Lösungen oder sonstigen mit Strahlmitteln versehenen Feststoffen gemäß einer bevorzugten Ausführungsform der vorliegenden Erfindung verwendet werden kann.

**Beschreibung der Erfindung**

Die Erfindung stellt ein verbessertes Verfahren zur Trennung von Cäsiumisotopen (insbesondere Cäsium-137) und Technetiumisotopen (insbesondere Technetium-99) aus dem Abgasstrom von nuklearen Verglasungsanlagen oder aus Wiederaufarbeitungsanlagen und Rückständen solcher Anlagen zur Verfügung, in denen radioaktiver Abfall und insbesondere HAWC-Lösungen verarbeitet und für die Endlagerung vorbereitet oder einer technischen Nutzung zugeführt werden. Ziel ist es bei dem erfindungsgemäßen Verfahren, die endzulagernde Abfallaktivität wirksam zu reduzieren, die abgetrennten Nuklide zu gewinnen und wirtschaftlich sowie technisch zu nutzen.

Die Begriff "Trennung von Cäsium und Technetium" aus radioaktivem Abfall umfasst dabei sowohl die gemeinsame Gewinnung der beiden Nuklide aus dem Abfall (Isolierung als Cäsiumpertechnetat) als auch die bevorzugte anschließende Trennung der beiden Elemente voneinander (Isolierung der getrennten Elemente). Alternativ kann das Verfahren auch als Verfahren zur Gewinnung von Cäsium und Technetium aus radioaktivem Abfall bezeichnet werden, wobei die Gewinnung sowohl in Form von Cäsiumpertechnetat als auch in Form der beiden separaten Elemente Cäsium und Technetium erfolgen kann. Werden die beiden Elemente separat gewonnen, so liegen sie letztendlich bevorzugt als die Feststoffe Technetiumdioxid und Cäsiumsalz (bevorzugt CsCl oder $Cs_2SO_4$) vor, die beispielsweise in der Medizintechnik wiederverwendet werden können. Erfindungswesentlich ist jedenfalls, dass das Verfahren die zielgerichtete Sublimation von Cäsiumpertechnetat ($CsTcO_4$) umfasst (d.h. die nachhaltige Trennung bzw. Gewinnung der beiden Elemente vom radioaktiven Abfall mit Hilfe der Sublimation).

Ein essentieller Schritt des erfindungsgemäßen Verfahrens ist die Gewinnung von Cäsiumpertechnetat mittels Sublimation (Schritt 1).

Diese Sublimation kann erfindungsgemäß grundsätzlich entweder direkt im Abgasstrom einer Aufarbeitungsanlage verlaufen oder aber aus Feststoffrückständen (z.B. in trockener, pastöser oder feuchter Form) aus der Wiederaufarbeitung von Kernbrennstoffen oder aus dem Verglasungsverfahren sowie anderen Feststoffrückständen aus HAWC-Lösungen oder sonstigen Feststoffen, auch wenn diese im Gemisch mit anderen Stoffen oder im feuchten Zustand vorliegen, erfolgen. Erfindungsgemäß geeignete Aufarbeitungsanlagen für radioaktive Stoffgemische sind beispielsweise ausgewählt aus (üblichen) Verglasungsanlagen, Sinterungsanlagen, Trocknungsanlagen, Verbrennungsanlagen, Zementierungsanlagen und Calcinierungsanlagen. Bei Durchführung z.B. in der Verglasungsanlage wird das Cäsiumpertechnetat durch geeignete Kühlmaßnahmen aus dem Abgasstrom durch Verfestigung (Abscheiden aus der

Gasphase) abgeschieden und anschließend abgetrennt. Die Durchführung in anderen Aufarbeitungsanlagen erfolgt entsprechend. Bei Verwendung von trockenen Rückständen werden diese (bevorzugt unter reduziertem Druck) in einem geeigneten Gefäß erhitzt, das sublimierte Cäsiumpertechnetat an kühlen Oberflächen wieder verfestigt (aus der Gasphase abgeschieden) und anschließend abgetrennt. In beiden Fällen scheidet sich das Cäsiumpertechnetat als sehr reiner Feststoff ab, der sich leicht gewinnen lässt.

Wird die Sublimation direkt im Abgasstrom einer Verglasungsanlage durchgeführt, d.h. das erfindungsgemäße Verfahren in ein Verglasungsverfahren einbezogen, ist es bevorzugt, das sich in dem heißen Abgasstrom befindliche Cäsiumpertechnetat (vorzugsweise bei Umgebungsdruck; reduzierter Druck ist aber auch möglich) mittels dem Abgasstrom nachgeschalteten Gaskühlern zu entziehen. Die heißen Verglasungsabgase werden dazu vorzugsweise im Luftstrom über die Kühlschlangen (auch Kühlfinger) der Gaskühler geleitet, wobei sich das im Abgasstrom diffundierende und in die Gaskühler eintretende Cäsiumpertechnetat dort in chemisch reiner Form kristallin abscheidet. Gaskühler können in mehrfacher Folge hintereinander (d.h. als mehrstufige Abgaskühler oder auch Gaskühlereinheiten) oder parallel geschaltet werden, wodurch sich die Effizienz der Abtrennung von Cäsiumpertechnetat weiter erhöht.

Eine bevorzugte Verfahrensführung umfasst dabei die Verwendung von Gaskühlereinheiten mit zwei, drei, vier, fünf oder mehr Gaskühlern, die in Reihe geschaltet sind. Besonders bevorzugt ist die Verwendung von Gaskühlereinheiten mit drei Gaskühlern, was drei in Reihe geschalteten Kühlzonen entspricht. Eine solche Gaskühlereinheit ist in Figur 1 gezeigt. Ganz besonders bevorzugt ist die Verwendung von zwei, drei oder vier (bevorzugt zwei) solcher Gaskühlereinheiten, die parallel zueinander geschaltet sind. Die Temperaturführung der Zonen hängt stark vom Verglasungsprozess und der Verglasungsanlage ab. In einer bevorzugten Ausführungsform erstrecken sich die Temperaturen der Kühlzonen von ca. 600 °C im Eintrittsbereich bis zu ca. 250 °C im Austrittsbereich des Gaskühlers.

Die am meisten bevorzugte Verfahrensführung umfasst die Verwendung von zwei Gaskühlereinheiten, die jeweils drei in Reihe geschaltete Gaskühler (Kühlzonen) aufweisen, wobei die zwei Gaskühlereinheiten derartig parallel geschaltet sind, dass sie abwechselnd a) zur Abscheidung von Cäsiumpertechnetat aus dem Abgasstrom und b) zur Gewinnung des abgeschiedenen Cäsiumpertechnetats verwendet werden und so einen kontinuierlichen Betrieb erlauben. Unter abwechselnd ist zu verstehen, dass pro Zeiteinheit in der einen der beiden Gaskühlereinheiten Cäsiumpertechnetat aus dem Abgasstrom abgeschieden wird, während in der anderen Gaskühlereinheit das dort vorher abgeschiedene Cäsiumpertechnetat gewonnen wird. Nach erfolgter Reinigung wird die Aufgabe der beiden Einheiten vertauscht, sodass es insgesamt zu einer kontinuierlichen Verfahrensführung ohne durch Gewinnung/Reinigung bedingte Standzeiten der Gesamtkühleinheiten kommt. Eine solche besonders bevorzugte Verfahrensführung ist in Figur 2 gezeigt.

Alternativ zum Verglasungsofen kann das erfindungsgemäße Verfahren auch mit Rückständen aus der Wiederaufarbeitung von Kernbrennstoffen oder aus anderen Aufarbeitungsverfahren (z.B. dem Sinterungsverfahren etc.) sowie allgemeinen Rückständen aus HAWC-Lösungen oder sonstigen im Gemisch vorliegenden Feststoffen, die Cäsiumpertechnetat enthalten, genutzt werden. In diesem Fall werden die Rückstände vorzugsweise in einem Gefäß (z.B. Kessel) gesammelt, durch Heizen bei geeigneter Temperatur (und bevorzugt reduziertem Druck) das $CsTcO_4$ in die Gasphase überführt und in ähnlicher Form wie beim der Ausführungsform im Abgasstrom des Verglasungsofens an gekühlten Gaskühlerflächen bzw. Kühlfingern abgeschieden. Ein geeignetes Gefäß ist in Figur 3 gezeigt.

Die angewendete Temperatur liegt bevorzugt in einem Bereich von unterhalb 500 °C, bevorzugt in einem Bereich von 100 °C bis 500 °C und besonders bevorzugt von 150 °C bis 450 °C und ganz besonders bevorzugt von 300 °C bis 400 °C. Dabei wird bevorzugt ein verringerter Druck angelegt, z.B. mit im Bereich von $10^{-8}$ bis $10^{-10}$ bar, bevorzugt von $10^{-9}$ bis $10^{-10}$ bar. Dadurch wird die Sublimationstemperatur von Cäsiumpertechnetat signifikant abgesenkt, wodurch das Verfahren schneller, einfacher und wirtschaftlicher erfolgen kann.

Erfindungsgemäß kann das Verfahren derartig durchgeführt werden, dass entweder das abgeschiedene Cäsiumpertechnetat vor Ort aus dem verwendeten Gefäß (d.h. vom Kühlfinger/den Kühlschlangen) abgetrennt wird, oder der Teil des verwendeten Gefäßes, an dem sich das Cäsiumpertechnetat abgeschieden hat (d.h. Kühlfinger/Kühlschlangen), vor der Abtrennung des Cäsiumpertechnetats dem Gefäß entnommen wird und an einen anderen geeigneten Ort transportiert wird, an dem dann die Abtrennung des Cäsiumpertechnetats und dessen Gewinnung erfolgt. Die Abtrennung kann in beiden Fällen durch mechanische Entfernung oder durch Abspülen mit einem geeigneten Lösungsmittel oder Wasser bewerkstelligt werden. Dadurch wird eine noch effizientere und wirtschaftlichere Trennung vom Restabfall erzielt.

Das gemäß irgendeiner der oben genannten Ausführungsformen des erfindungsgemäßen Verfahrens abgeschiedene reine Cäsiumpertechnetat wird vorzugsweise durch Lösen mit einem anorganischen oder organischen Lösungsmittel umfassend Wasser abgetrennt.

Geeignete anorganische Lösungsmittel sind flüssiger Ammoniak oder Kohlendioxid. Geeignete organische Lösungsmittel sind inerte Lösungsmittel, wie halogenierte Kohlenwasserstoffe. Vorzugsweise wird reines Wasser verwendet. Grundlage dafür bildet die Löslichkeit des Cäsiumpertechnetats in Wasser von 8,79 g/l bei 40°C. Die Temperatur des Lösungsmittels beträgt dabei bevorzugt 20 °C bis 60°C, bevorzugt 30 °C bis 50 °C (Schritt 2). Die Gaskühler (d.h. Kühlfinger) können anschließend erneut für den Abscheidungsprozess verwendet werden.

Auf diese Weise wird eine wässrige Cäsiumpertechnetatlösung erhalten, die einer weiteren Aufarbeitung unterzogen werden kann. Alternativ wird das abgeschiedene Cäsiumpertechnetat nicht als wässrige Cäsiumpertechnetatlösung isoliert, sondern die weitere Aufarbeitung erfolgt direkt mit dem (z.B. auf dem Kühlfinger) abgeschiedenen Cäsiumpertechnetat.

Die vorzugsweise durchgeführte Aufarbeitung des Cäsiumpertechnetats gemäß der vorliegenden Erfindung umfasst die beiden nachstehenden optionalen Schritte (Schritt 3 und Schritt 4). Im gemäß vorliegender Erfindung vorzugsweise durchgeführten Schritt 3 wird Technetium von Cäsium chemisch getrennt. Dazu wird Cäsiumpertechnetat entweder in wässriger Lösung oder in nicht-wässriger Lösung (bevorzugt in wässriger Lösung) einer Reduktion unterzogen, bei der das Pertechnetat zu Technetiumdioxid ($TcO_2$ • 1-2 $H_2O$) umgesetzt wird, das als Feststoff aus der Lösung ausfällt, während Cäsium in wässriger Lösung verbleibt. Geeignete Reduktionsmittel sind grundsätzlich alle Stoffe, die in der Lage sind, Pertechnetat zu reduzieren, wie z.B. $LiAlE_4$, $NaBH_4$ oder Alkalimetallhydride. Besonders geeignet sind Reduktionsmittel, deren Produkte nach der Reaktion keine zusätzlichen Elemente in die Lösung einbringen, wie Hydrazin, Kohlenmonoxid, sowie organische Reduktionsmittel wie Formaldehyd, Acetaldehyd, Ameisensäure, Oxalsäure. Hydrazin ist besonders bevorzugt.

Das als Feststoff ausgefallene Technetiumdioxid kann anschließend abgetrennt werden, vorzugsweise durch Filtration. Nach Neutralisation des Filtrats (z.B. mit Schwefelsäure oder Salzsäure) liegt Cäsium als gelöstes Cäsiumsalz (z.B. als Cäsiumsulfat oder Cäsiumchlorid) in der wässrigen Phase vor. Auf diese Weise werden Cäsium und Technetium effizient auf nasschemischem Weg getrennt. Cäsium-Technetium-Trennungen auf der Basis von Extraktionen mit organischen Lösungsmitteln aus der wässrigen Phase werden herkömmlich mit Tri-n-octylphosphoroxid in Cyclohexanon durchgeführt. Diese Reaktionen benötigen aber immer eine zusätzliche Abtrennung des Lösungsmittels oder eine Re-extraktion der organischen Phase mit einer wässrigen Lösung, um das Technetium aus der organischen Phase in die wässrige Phase zurückzuholen. Diese Re-extraktion aus organischen Lösungsmitteln ist sehr aufwendig.

In einem optionalen nachfolgenden Schritt 4 wird die wässrige Phase eingedampft (beispielsweise unter Vakuum bei Temperaturen im Bereich von 30 °C bis 50 °C) und Cäsium in Form von festen Cäsiumsalzen gewonnen, die einer weiteren Reinigung und Aufarbeitung unterzogen werden können. Vorzugsweise können die Salze bei Temperaturen im Bereich von 80 °C bis 100 °C (z.B. bei 90 °C) im Vakuum in die wasserfreien Salze überführt werden. Besonders bevorzugt sind dabei Cäsiumsulfat oder Cäsiumchlorid, die - in wasserfreier Form - direkt nach der Charakterisierung und Aktivitätsmessung für die Herstellung von Cäsium-137-Bestrahlungsquellen in der Medizin Verwendung finden können.

Das abfiltrierte Technetiumdioxid wird von anhaftendem Cäsiumsalz gereinigt und getrocknet. Es kann bei erhöhten Temperaturen (oberhalb von 200 °C, z.B. bei 300 °C) im Vakuum in seine wasserfreie Form überführt werden. Das pulverförmige wasserfreie Technetiumdioxid kann dann in Pellets gepresst werden und z.B. der Transmutation im Reaktor zugeführt oder in ein nukleares Endlager abgegeben werden.

Das erfindungsgemäße Verfahren hat insbesondere folgende Vorteile gegenüber herkömmlichen Verfahren aus dem Stand der Technik:

Die Abtrennung von Cäsiumpertechnetat ermöglicht es, den Eintrag von Cäsiumpertechnetat in die Abgasstrecke von Verglasungsanlagen zu minimieren, und löst daher ein lange bestehendes technisches Problem vieler Verglasungsanlagen. Damit werden Wartung und Betrieb laufender Verglasungsanlagen einfacher, und es verbleiben weniger radioaktive Reststoffe im Abgassystem. Das erfindungsgemäße Verfahren erlaubt es zudem, eingetrocknete oder feste Rückstände von beispielsweise HAWC- oder Spüllösungen von Cäsiumpertechnetat zu befreien. Dadurch wird die Aufarbeitung und Endlagerung dieses Abfalls wirtschaftlicher und umweltfreundlicher. Weiterhin erlaubt das erfindungsgemäße Verfahren, Cäsiumisotope einer wirtschaftlichen Nutzung bei der Herstellung von Cäsium Bestrahlungsquellen zur medizinischen oder technischen Verwendung zuzuführen, da das gewonnenen Cäsium chemisch rein dargestellt wird (z.B. als wasserfreies Cäsiumsulfat oder Cäsiumchlorid).

Das erfindungsgemäße Verfahren ermöglicht es ferner, Cäsiumisotope und Technetiumisotope von den anderen Spaltprodukten der Kernspaltung des Urans oder Plutoniums abzutrennen. Dadurch wird die Restaktivität des bei der Kernspaltung anfallenden radioaktiven Abfalls und damit die Abfallmenge der Kernspaltung deutlich verringert. So können bis zu 41% der mittellanglebigen Aktivität der Abfälle aus der friedlichen oder militärischen Anwendung der Kernspaltung wieder einer wirtschaftlichen Nutzung zugeführt werden. Das erfindungsgemäße Verfahren ermöglicht es schließlich auch, Technetium-99, welches bis zu 81% der Aktivität der langlebigen Spaltstoffe darstellt, aus dem radioaktiven Abfall (z.B. HAWC) abzutrennen. Das chemisch stabile wasserfreie Technetiumdioxid kann entweder für die Transmutation bereitgestellt oder auf Grund seiner wasserunlöslichen Eigenschaften direkt der Endlagerung in tiefen geologischen Gesteinsformationen zugeführt werden. Das Verfahren ist in der beschriebenen Weise für alle Cäsium- und Technetiumisotope geeignet. Insgesamt wird erfindungsgemäß die Endlagerfähigkeit von Technetium-99 deutlich verbessert, da Technetiumdioxid chemisch und thermisch stabil sowie wasserunlöslich und unter den zu erwartenden Umgebungsbedingungen nicht flüchtig ist. Für die Endlagerung kann daher auf weitere Immobilisierungsmaßnahmen verzichtet werden.

Die Erfindung stellt weiterhin eine Vorrichtung zur Trennung von Cäsium und Technetium aus radioaktivem Abfall zur Verfügung. Die Vorrichtung ist vorzugsweise angepasst an das erfindungsgemäße Verfahren und zur Durchführung des erfindungsgemäßen Verfahrens geeignet. Das gilt insbesondere für die Ausführungsform zur Durchführung im Abgasstrom einer Verglasungsanlage. Die erfindungsgemäße Vorrichtung erlaubt es, Cäsiumpertechnetat, welches sich entweder gasförmig im Abgasstrom einer Verglasungsanlage befindet oder durch Sublimation aus trockenen Rückständen aus der Wiederaufarbeitung von Kernbrennstoffen oder aus dem Verglasungsverfahren oder anderen Rückständen aus HAWC-Lösungen erhalten wurde, in Reinform zu gewinnen und zu isolieren. Das erhaltene kristalline Cäsiumpertechnetat kann dann wie oben beim erfindungsgemäßen Verfahren beschrieben in die beiden Elemente Cäsium und Technetium getrennt werden.

Die erfindungsgemäße Vorrichtung weist eine Mehrzahl von grundsätzlich handelsüblichen Gaskühlern (d.h. Kühlzonen/Zonengaskühler) auf, welche zur Abscheidung von sublimiertem Cäsiumpertechnetat darin befindliche Kühlfinger oder Kühlschlangen enthalten. Die Gaskühler können parallel und/oder in Reihe geschaltet sein, wodurch sich Gaskühlereinheiten ergeben. Bevorzugt werden zwei, drei, vier, fünf oder mehr Gaskühler hintereinander in Reihe geschaltet. Besonders bevorzugt ist eine Gaskühlereinheit mit drei Gaskühlern. Die erfindungsgemäße Vorrichtung wird bevorzugt dem Abgasstrom einer Verglasunganlage vorgeschaltet. Anders ausgedrückt werden die Abgase einer Verglasungsanlage, die Cäsiumpertechnetat in der Gasphase enthalten, in die erfindungsgemäße Vorrichtung eingeleitet, sodass Cäsiumpertechnetat dort in Reinform und in hoher Effizienz abgeschieden werden kann. Eine erfindungsgemäße Vorrichtung (Gaskühlereinheit) ist in Figur 1 gezeigt. Ganz besonders bevorzugt ist eine Vorrichtung, bei der zwei, drei oder vier (bevorzugt zwei) solcher Gaskühlereinheiten in Reihenschaltung zueinander parallel geschaltet sind.

Die am meisten bevorzugte erfindungsgemäße Vorrichtung umfasst zwei Gaskühlereinheiten, die jeweils drei in Reihe geschaltete Gaskühler (Kühlzonen) aufweisen, wobei die zwei Gaskühlereinheiten derartig parallel geschaltet sind, dass sie abwechselnd a) zur Abscheidung von Cäsiumpertechnetat aus dem Abgasstrom und b) zur Gewinnung des abgeschiedenen Cäsiumpertechnetats verwendbar sind und so ein kontinuierlicher Betrieb ermöglicht wird. Unter abwechselnd ist zu verstehen, dass pro Zeiteinheit in der einen der beiden Gaskühlereinheiten Cäsiumpertechnetat aus dem Abgasstrom abgeschieden wird, während in der anderen Gaskühlereinheit das dort vorher abgeschiedene Cäsiumpertechnetat gewonnen wird. Nach erfolgter Reinigung wird die Aufgabe der beiden Einheiten vertauscht, sodass es insgesamt zu einer kontinuierlichen Verfahrensführung ohne durch Gewinnung/Reinigung bedingte Standzeiten der Gesamtkühleinheiten kommt. Eine solche besonders bevorzugte Vorrichtung ist in Figur 2 gezeigt. Diese Vorrichtung ist insbesondere zur Verwendung im Abgasstrom einer Verglasunganlage zur Gewinnung von kristallinem Cäsiumpertechnetat geeignet.

Im Folgenden werden bevorzugte Ausführungsformen zur Gewinnung von Cäsiumpertechnetat und dessen weitere Aufarbeitung unter Trennung von Cäsium und Technetium gemäß dem erfindungsgemäßen Verfahren und der erfindungsgemäßen Vorrichtung näher beschrieben:

**1.** Einbindung des erfindungsgemäßen Verfahrens in das Abgassystem einer Verglasungsanlage

Dazu wird ein System wie in Figur 2 angegeben verwendet. Kernstück ist die in Figur 1 im Detail gezeichnete Gaskühlereinheit (Zonengaskühler), die in doppelter Ausführung im System vorliegt. Diese Gaskühlereinheit ist über die Armatur V11 (V21) mit dem Abluftflansch des Verglasungsofens (nicht gezeigt) verbunden. Die Verbindung zwischen dem Abluftflansch des Verglasungsofens und V11/V21 ist thermisch isoliert und elektrisch auf ungefähr 600 °C geheizt. Das System ist redundant ausgeführt. Im Betrieb wird ein Kühler betrieben, während der andere gereinigt wird.

Der Betrieb wird anhand der Gaskühlereinheit (Zonengaskühler) WT 10 nachstehend erläutert. Die Einheit WT 20 arbeitet analog. Während des Betriebes von Gaskühlereinheit (Zonengaskühler) WT 10 sind die Armaturen V11, V12 offen und die Armaturen V13, V14 geschlossen. Abgas aus dem Verglasungsofen strömt über die geheizte Leitung über V11 aus dem Ofen in den Zonengaskühler WT10 und wird schrittweise an den Kühlschlangen abgekühlt, d.h. im unteren Bereich des ersten Kühlschlangenbündels von ca. 600 °C auf 500 °C an der Oberkante der ersten Kühlschlange, im mittleren Bereich von 500 °C auf ca. 350 °C an der Oberkante des zweiten Kühlschlangenbündels und im oberen Bereich auf ca. 250 °C am dritten Kühlschlangenbündel. Dabei scheidet sich Cäsiumpertechnetat an den Kühlschlangen in reiner (kristalliner) Form ab. Durch die Temperaturführung beginnt die Kristallisation ab der Oberkante des zweiten Kühlschlangenbündels. Im Verlauf der zweiten und dritten Bündel und kristallisiert das gesamte, sich in der Abluft befindliche Cäsiumpertechnetat an den Kühlschlangen aus. Da durch fortlaufenden Betrieb der Durchmesser des WT10 verringert wird, kann über die Druckmessungen P11 und P12 eine Druckdifferenz P11-P12 festgelegt werden, ab der der Zonengaskühler gereinigt werden soll. Alternativ ist es möglich, über die an der Dosisleistungssonde DL1 gemessene Dosisleistung über den Zeitpunkt der Reinigung des Zonengaskühlers zu entscheiden.

Zur Reinigung werden die Armaturen V21 und V22 geöffnet und der Zonengaskühler WT 20 in Betrieb genommen. Danach wird V11 geschlossen. Nun wird der Kühler WT 10 auf allen Kühlschlangen mit Kühlmittel bei 40 °C betrieben. Sobald alle Kühltemperaturen stabil bei 40 °C liegen (eine höhere Temperatur bis 100 °C ist möglich und erhöht die Löslichkeit des Pertechnetats zusätzlich, allerdings muss darauf geachtet werden, dass bei der weiteren Verarbeitung die Lösung nicht abkühlt und Cäsiumpertechnetat dann wieder ausfällt), wird der Kühler WT 10 über V40 und V13 mit Wasser als Lösungsmittel gefüllt. Der Füllgrad kann über Füllstandssonde L1 kontrolliert werden. Es muss

auch das oberste Kühlschlangenbündel komplett mit Lösungsmittel überdeckt sein. Durch Umwälzen mit Pumpe 1 über V13 und V14 wird das kristallisierte Cäsiumpertechnetat von den Kühlschlangen bei ca. 40 °C gelöst. Der Prozess kann durch Probenahme kontrolliert werden. Das Cäsiumpertechnetat gilt als vollständig gelöst, nachdem keine weitere Aktivitätskontzentrationszunahme in der Lösung mehr festgestellt werden kann. Danach wird WT 10 über die Armatur V30 entleert. Die entstandene Lösung kann der weiteren Aufarbeitung (d.h. der Trennung von Cäsium und Technetium, wie nachstehend beschrieben) zugeführt werden. Der Kühler WT 10 steht wieder für den Betrieb zur Verfügung. Beide Kühler W T10 und WT 20 werden beim Verglasungsbetrieb wechselweise betrieben bzw. gereinigt, so dass während des Verglasungsbetriebes kontinuierlich Cäsiumpertechnetat in wässriger Lösung abgetrennt werden kann.

**2.** Anwendung des erfindungsgemäßen Verfahrens für die Verarbeitung von Feststoffrückständen aus der Wiederaufarbeitung oder Verglasung, die überwiegend aus radioaktiven Cäsium-137-pertechnetat-99 bestehen

Das erfindungsgemäße Verfahren wird auf Rückstände angewendet, die sich direkt in einem Behälter befinden. Ebenso lässt sich das erfindungsgemäße Verfahren auf Rückstände anwenden, die z.B. aus der Sandstrahlreinigung oder ähnliche Verfahren resultieren, während der Cäsiumpertechnetat von Komponentenoberflächen z.B. mit Strahlsand abgelöst und in einem Sammelbehälter zusammen oder getrennt vom Strahlgut gesammelt wird. Diese Rückstände werden in einem speziell konstruierten von außen beheizbaren (z.B. elektrisch) radiologisch abgeschirmten Behälter gesammelt, wie er in Figur 3 gezeigt ist. Dieser Behälter hat einen vakuumdichten Flanschdeckel mit Kühlfinger. Der Behälter wird vakuumdicht verschlossen, und über den Deckelanschluss wird ein verminderter Druck angelegt. Vorzugsweise wird ein Druck von $10^{-9}$ bis $10^{-10}$ bar eingestellt (Hochvakuum). Danach werden die Rückstände auf die Sublimationstemperatur des Cäsiumpertechnetats bei dem jeweiligen Druck + 50-100 K erhitzt. Am Kühlfinger scheidet sich reines (kristallines) Cäsiumpertechnetat ab. Die Kühlfingertemperatur kann dabei ungefähr 20 °C (Rücklauftemperatur des Kühlwassers) betragen.

Nach erfolgter Sublimation wird die Anlage abgekühlt und danach der Behälter belüftet, und der Deckel mit dem Kühlfinger auf einen abschirmbaren Behälter umgesetzt und mit dessen Flansch dicht verschraubt. Dieser Behälter ist bereits abgeschirmt oder für einen anstehenden Transport abschirmbar.

Das Lösen des Cäsiumpertechnetats mit reinem Wasser erfolgt bei ungefähr 40 °C über den Spülanschluss des Behälters und den Anschluss des Deckels. Vorzugsweise wird die Lösung mit einer Pumpe (druckseitig mit dem unteren Behälteranschluss verbunden) über den Anschluss im Deckel im Kreislauf umgewälzt. Der Lösevorgang gilt als beendet, wenn die Cäsium-137-Aktivität in Proben der wässrigen Lösung nicht mehr ansteigt. Die erzeugte wässrige Cäsiumpertechnetatlösung wird abgetrennt und der weiteren Aufarbeitung (d.h. der Trennung von Cäsium und Technetium, wie nachstehend beschrieben) zugeführt. Der gereinigte Deckelflansch kann zur nächsten Sublimation verwendet werden. Das so erzeugte sublimierte Cäsiumpertechnetat ist chemisch rein und kann ohne Probleme weiter verarbeitet werden.

3. Aufarbeitung der Cäsiumpertechnetatlösung/Trennung der Elemente Technetium und Cäsium

Die resultierende Cäsiumpertechnetatlösung wird auf eine Temperatur zwischen 30 °C und 40 °C erhitzt, und unter Rühren wird eine 20%-ige Lösung von Hydrazin in Wasser zugetropft. Es entsteht eine graue Färbung, und durch weitere Zugabe von Hydrazinlösung sondert sich ein braun-schwarzer Feststoff ab.

Es läuft folgende Reaktion ab:

$$4\,Cs^{+} + 4\,TcO_4^{-} + 3\,N_2H_4 \underset{30°C}{\longrightarrow} 4\;TcO_2\,(prec.*\,1 - 2\,H_2O) + 4\;Cs^{+} + 4\,OH^{-} + 4\,H_2O + 3\,N_2$$

Dabei reagiert das zugetropfte Hydrazin mit den Pertechnetationen zu Technetiumdioxid, das in Wasser unlöslich ist und als Dihydrat ausfällt. Es bleibt eine wässrige Cäsiumhydroxidlösung zurück. Die vorsichtige Dosierung von Hydrazin wird fortgesetzt, bis kein Technetiumdioxid mehr ausfällt. In der Lösung sollte bei kompletter Reduktion und Abschluss der Zudosierung ein Hydrazinüberschuss von 10 bis 20 mg/kg für 10 min bei 30 °C nachweislich bestehen bleiben, um die Abwesenheit von Pertechnetat sicherzustellen. Der pH-Wert liegt am Ende der Reaktion im alkalischen Bereich (oberhalb von pH 8). Danach wird die Lösung ca. 1 h stehen gelassen, so dass sich das gebildete Technetiumdioxiddihydrat absetzen kann. Der Niederschlag wird abfiltriert und mit kaltem Wasser gewaschen, bis über eine Gammasondenmessung keine nennenswerte Cäsiumkonzentration am Niederschlag mehr gemessen werden kann.

Das abfiltrierte Technetiumdioxiddihydrat kann getrocknet und bei 300 °C und reduziertem Druck vom Kristallwasser befreit werden:

$$TcO_2 x\, 2\, H_2O \xrightarrow[300°C,\ Vakuum]{} TcO_2 + 2\, H_2O$$

Technetiumdioxid kann dann entweder direkt der Endlagerung zugeführt werden oder zu Pellets gepresst und gesintert in brennstabähnliche Gebilde zur Transmutation verwendet werden.

Verarbeitung des zurückbleibenden Cäsiums:

Das Waschwasser und das Filtrat werden vereinigt und mit einer geeigneten Säure auf pH 7 neutralisiert. Geeignete Säuren sind anorganische Säuren, wie Schwefelsäure, Salzsäure oder Phosphorsäure. Besonders bevorzugt ist Salzsäure, mit der die Reaktion wie folgt abläuft:

$$CsOH + HCl \rightarrow \mathrm{CsCl} + H_2O$$

Es entsteht durch die Neutralisation Cäsiumchlorid, das durch Verdampfen des Wassers bei 40 °C im Vakuum kristallisiert und bei 90 °C im Vakuum zum wasserfreien Salz getrocknet werden kann. Das wasserfreie Cäsiumchlorid kann als Ausgangssubstanz für medizinische Strahler verwendet werden. Abgewogen und mittels Presse in Tablettenform gepresst kann es Anwendung in z.B. medizinischen oder technischen Strahlungsquellen finden.

**Beispiel:**

Das nachstehende Beispiel verdeutlicht das erfindungsgemäße Verfahren weiter:

1. Sublimation

Ein Festkörpergemisch aus 5 g Strahlgut (z.B. Granatstrahlsand) und 3,5 g Cäsiumpertechnetat ($CsTcO_4$) wird in einer Sublimationsapparatur eingebracht und bei reduziertem Druck von etwa $8,5 \cdot 10^{-5}$ mbar und 390 °C sublimiert. Etwa 3,1 g reinweißes $CsTcO_4$ scheiden sich feinkristallin auf der Oberfläche des Kühlfingers ab. Das Produkt kann mit 1 1 destillierten Wasser bei ca. 50 °C abgelöst werden und liefert nach Eindampfen im Vakuum bei 60 °C etwa 3,1 g $CsTcO_4$. Alternativ kann das sublimierte $CsTcO_4$ am Kühlfinger verbleiben und direkt für die folgende reduktive Trennung verwendet werden.

2. Reduktive Trennung

Für die reduktive Trennung werden 3,1 g $CsTcO_4$, die entweder nach Eindampfen aus der Sublimation oder als feinkristalliner Feststoff am Kühlfinger anhaftend erhalten wurden, verwendet. Der Feststoff wird mit 70 ml einer 20%-igen, wässrigen Hydrazinlösung versetzt. Unter Rühren scheidet sich schwarzes Technetiumdioxid als Dihydrat ($TcO_2 \cdot$ 1-2 $H_2O$) ab. Die Reaktion wird durch vorsichtiges Eindampfen vervollständigt. Der erhaltene, feuchte Kristallbrei wird mit destilliertem Wasser aufgenommen und über einen 0,5 $\mu$m Teflonfilter abgesaugt. Der Filterkuchen wird mit Wasser gewaschen, bis eine gewünschte Restaktivität an Cäsium-137 im Filterkuchen erreicht ist. Der gewaschene Filterkuchen wird auf dem Filter getrocknet und anschließend mechanisch entfernt. Das gewonnene $TcO_2 \cdot$ 1-2 $H_2O$ kann bei 300 °C im Hochvakuum vom Kristallwasser befreit werden.

Die vereinigten Filtrate und Eluate der resultierenden Cäsiumhydroxidlösung werden mit verdünnter Salzsäure zu pH 7 neutralisiert und anschließend im Vakuum eingedampft. Das ausfallende Cäsiumchlorid wird bei 100 °C im Trockenschrank unter Vakuum zum wasserfreien Salz getrocknet.

**Patentansprüche**

**1.** Verfahren zur Trennung von Cäsium- und Technetiumisotopen aus radioaktiven Stoffgemischen, **dadurch gekennzeichnet, dass** das Verfahren die Sublimation von Cäsiumpertechnetat ($CsTcO_4$) umfasst.

**2.** Verfahren nach Anspruch 1, wobei die Sublimation im Abgasstrom einer Aufarbeitungsanlage, umfassend Verglasungs-, Sinterungs-, Trocknungs-, Verbrennungs-, Zementierungs- oder Calcinierungsanlagen, verläuft.

**3.** Verfahren nach Anspruch 1 und/oder Anspruch 2, wobei als Ausgangsmaterial für die Sublimation Rückstände aus der Wiederaufarbeitung von Kernbrennstoffen oder aus den Aufarbeitungsanlagen oder andere Rückstände aus

HAWC- oder Spüllösungen verwendet werden.

4. Verfahren nach einem der Ansprüche 1 bis 3, wobei das sublimierte Cäsiumpertechnetat aus der Gasphase durch Verfestigung abgeschieden und anschließend abgetrennt wird.

5. Verfahren nach Anspruch 4, wobei die Verfestigung in einem oder mehreren Gaskühlern erfolgt, die parallel und/oder in Reihe geschaltet sein können.

6. Verfahren nach Anspruch 4 und /oder Anspruch 5, wobei das abgeschiedene Cäsiumpertechnetat vor Ort aus der verwendeten Apparatur abgetrennt wird oder die verwendete Apparatur vor der Abtrennung des Cäsiumpertechnetats an einen anderen Ort transportiert wird.

7. Verfahren nach einem der Ansprüche 4 bis 6, wobei die Abtrennung des Cäsiumpertechnetats durch Lösen mit einem anorganischen oder organischen Lösungsmittel umfassend Wasser oder Mischungen derselben erfolgt.

8. Verfahren nach einem der Ansprüche 1 bis 7, wobei in einem weiteren Schritt das Cäsiumpertechnetat einer Reduktion unterzogen wird, bei der das Pertechnetat zu Technetiumdioxid umgesetzt wird, welches dann abgetrennt wird.

9. Verfahren nach Anspruch 8, wobei die Reduktion von Cäsiumpertechnetat in wässriger Lösung mit einem Reduktionsmittel, ausgewählt aus $LiAlH_4$, $NaBH_4$ Alkalimetallhydriden, Hydrazin, Kohlenmonoxid, Formaldehyd, Acetaldehyd, Ameisensäure oder Oxalsäure, erfolgt und das gebildete Technetiumdioxid als Feststoff abgetrennt wird, während Cäsium in wässriger Lösung verbleibt.

10. Verfahren nach Anspruch 9, wobei die wässrige Lösung eingedampft wird und Cäsium in Form von festen Cäsiumsalzen gewonnen wird.

11. Vorrichtung zur Trennung von Cäsium- und Technetiumisotopen aus radioaktiven Stoffgemischen, **dadurch gekennzeichnet, dass** die Vorrichtung eine Mehrzahl von Gaskühlern umfasst, die parallel und/oder in Reihe geschaltet sind, wobei die Vorrichtung mindestens zwei Gaskühlereinheiten umfasst, die jeweils mindestens drei in Reihe geschaltete Gaskühler aufweisen, wobei die mindestens zwei Gaskühlereinheiten parallel geschaltet sind, und dadurch dass die Vorrichtung in den Abgasstrom einer Aufarbeitungsanlage, umfassend Verglasungs-, Sinterungs-, Trocknungs-, Verbrennungs-, Zementierungs- oder Calcinierungsanlagen, zur Abtrennung von Cäsiumpertechnetat eingebunden ist.

12. Vorrichtung nach Anspruch 11, **dadurch gekennzeichnet, dass** die Vorrichtung zwei Gaskühlereinheiten umfasst, die jeweils drei in Reihe geschaltete Gaskühler aufweisen, wobei die zwei Gaskühlereinheiten derartig parallel geschaltet sind, dass sie abwechselnd zur Abscheidung von Cäsiumpertechnetat aus dem Abgasstrom und zur Gewinnung des abgeschiedenen Cäsiumpertechnetats verwendet werden und so einen kontinuierlichen Betrieb erlauben.

## Claims

1. A method for separating cesium and technetium isotopes from mixtures of radioactive substances, **characterized in that** the method comprises the sublimation of cesium pertechnetate ($CsTcO_4$).

2. The method according to claim 1, wherein the sublimation runs in the exhaust gas flow of a processing plant, comprising vitrification, sintering, drying, combustion, cementing or calcinating plants.

3. The method according to claim 1 and/or claim 2, wherein residues from the reprocessing of nuclear fuels or from the reprocessing plants or other residues from HAWC solutions or rinsing solutions are used as the starting material for the sublimation.

4. The method according to one of claims 1 to 3, wherein the sublimated cesium pertechnetate is deposited from the gas phase using consolidation and is then separated.

5. The method according to claim 4, wherein the consolidation takes place in one or more gas coolers which can be

connected in parallel and/or in series.

**6.** The method according to claim 4 and/or claim 5, wherein the deposited cesium pertechnetate is separated from the apparatus used in situ or the apparatus used is transported to a different location before the cesium pertechnetate is separated.

**7.** The method according to one of claims 4 to 6, wherein the cesium pertechnetate is separated by dissolving with an inorganic or organic solvent comprising water or mixtures thereof.

**8.** The method according to one of claims 1 to 7, wherein, in a further step, the cesium pertechnetate is reduced, during which reduction the pertechnetate is converted to technetium dioxide which is then separated off.

**9.** The method according to claim 8, wherein the reduction of cesium pertechnetate in aqueous solution occurs with a reducing agent selected from $LiAlH_4$, $NaBH_4$, alkali metal hydrides, hydrazine, carbon monoxide, formaldehyde, acetaldehyde, formic acid or oxalic acid, and the technetium dioxide formed is separated off as a solid, while cesium remains in aqueous solution.

**10.** The method according to claim 9, wherein the aqueous solution is concentrated by evaporation and cesium is obtained in the form of solid cesium salts.

**11.** A device for separating cesium and technetium isotopes from mixtures of radioactive materials, **characterized in that** the device comprises a plurality of gas coolers that are connected in parallel and/or in series, wherein the device comprises at least two gas cooling units, each having at least three gas coolers connected in series, wherein the at least two gas cooling units are connected in parallel, and **in that** the device is integrated into the exhaust gas flow of a processing plant, comprising vitrification, sintering, drying, combustion, cementing plants or calcinating plants, for separating cesium pertechnetate.

**12.** The device according to claim 11, **characterized in that** the device comprises two gas cooling units, each having at least three gas coolers connected in series, wherein the two gas cooling units are connected in parallel such that they are used alternately for depositing cesium pertechnetate from the exhaust gas flow and for obtaining the separated cesium pertechnetate, and thus allow continuous operation.

**Revendications**

**1.** Procédé pour séparer des isotopes du césium et du technétium de mélanges de substances radioactives, **caractérisé en ce que** le procédé comporte la sublimation de pertechnétate de césium ($CsTcO_4$).

**2.** Procédé selon la revendication 1, dans lequel la sublimation a lieu dans le flux de gaz d'échappement d'une installation de traitement, y compris des installations de vitrification, de frittage, de séchage, de combustion, de cémentation ou de calcination.

**3.** Procédé selon la revendication 1 et/ou la revendication 2, dans lequel des résidus du retraitement de combustibles nucléaires ou d'installations de traitement ou d'autres résidus de solutions de HAWC ou de solutions de rinçage sont utilisés comme matériau de départ pour la sublimation.

**4.** Procédé selon l'une des revendications 1 à 3, dans lequel le pertechnétate de césium sublimé est déposé à partir de la phase gazeuse par consolidation, et est ensuite séparé.

**5.** Procédé selon la revendication 4, dans lequel la consolidation a lieu dans un ou plusieurs refroidisseurs de gaz qui peuvent être raccordés en parallèle et/ou en série.

**6.** Procédé selon la revendication 4 et/ou la revendication 5, dans lequel le pertechnétate de césium déposé est séparé in situ de l'appareillage utilisé ou l'appareillage utilisé est transporté jusqu'à un autre site avant la séparation du pertechnétate de césium.

**7.** Procédé selon l'une des revendications 4 à 6, dans lequel le pertechnétate de césium est séparé par dissolution avec un solvant inorganique ou organique comportant de l'eau ou des mélanges aqueux.

**8.** Procédé selon l'une des revendications 1 à 7, dans lequel à une étape supplémentaire, le pertechnétate de césium est soumis à une réduction au cours de laquelle le pertechnétate est converti en dioxyde de technétium qui est ensuite séparé.

**9.** Procédé selon la revendication 8, dans lequel la réduction du pertechnétate de césium en solution aqueuse s'effectue avec un réducteur choisi parmi $LiAlH_4$, $NaBH_4$, des hydrures de métaux alcalins, de l'hydrazine, du monoxyde de carbone, un formaldéhyde, un acétaldéhyde, un acide formique ou oxalique, et le dioxyde de technétium formé est séparé sous forme de matière solide, alors que le césium reste dans la solution aqueuse.

**10.** Procédé selon la revendication 9, dans lequel la solution aqueuse est concentrée par évaporation et le césium est obtenu sous forme de sels de césium solides.

**11.** Dispositif pour la séparation des isotopes du césium et du technétium de mélanges de substances radioactives, **caractérisé en ce que** le dispositif comporte une pluralité de refroidisseurs de gaz qui sont raccordés en parallèle et/ou en série, dans lequel le dispositif comporte au moins deux unités de refroidisseurs de gaz qui comportent respectivement au moins trois refroidisseurs de gaz branchés en série, dans lequel les au moins deux unités de refroidisseurs de gaz sont raccordées en parallèle, et **en ce que** le dispositif est intégré dans le flux de gaz d'échappement d'une installation de traitement, y compris des installations de vitrification, de frittage, de séchage, de combustion, de cémentation ou de calcination, pour la séparation du pertechnétate de césium.

**12.** Dispositif selon la revendication 11, **caractérisé en ce que** le dispositif comporte deux unités de refroidisseurs de gaz qui comportent respectivement trois refroidisseurs de gaz raccordés en série, dans lequel les deux unités de refroidisseurs de gaz sont raccordées en parallèle, de telle sorte qu'elles sont utilisées à tour de rôle pour séparer le pertechnétate de césium du flux de gaz d'échappement et pour obtenir le pertechnétate de césium séparé, et permettent ainsi un fonctionnement en continu.

Figur 1:

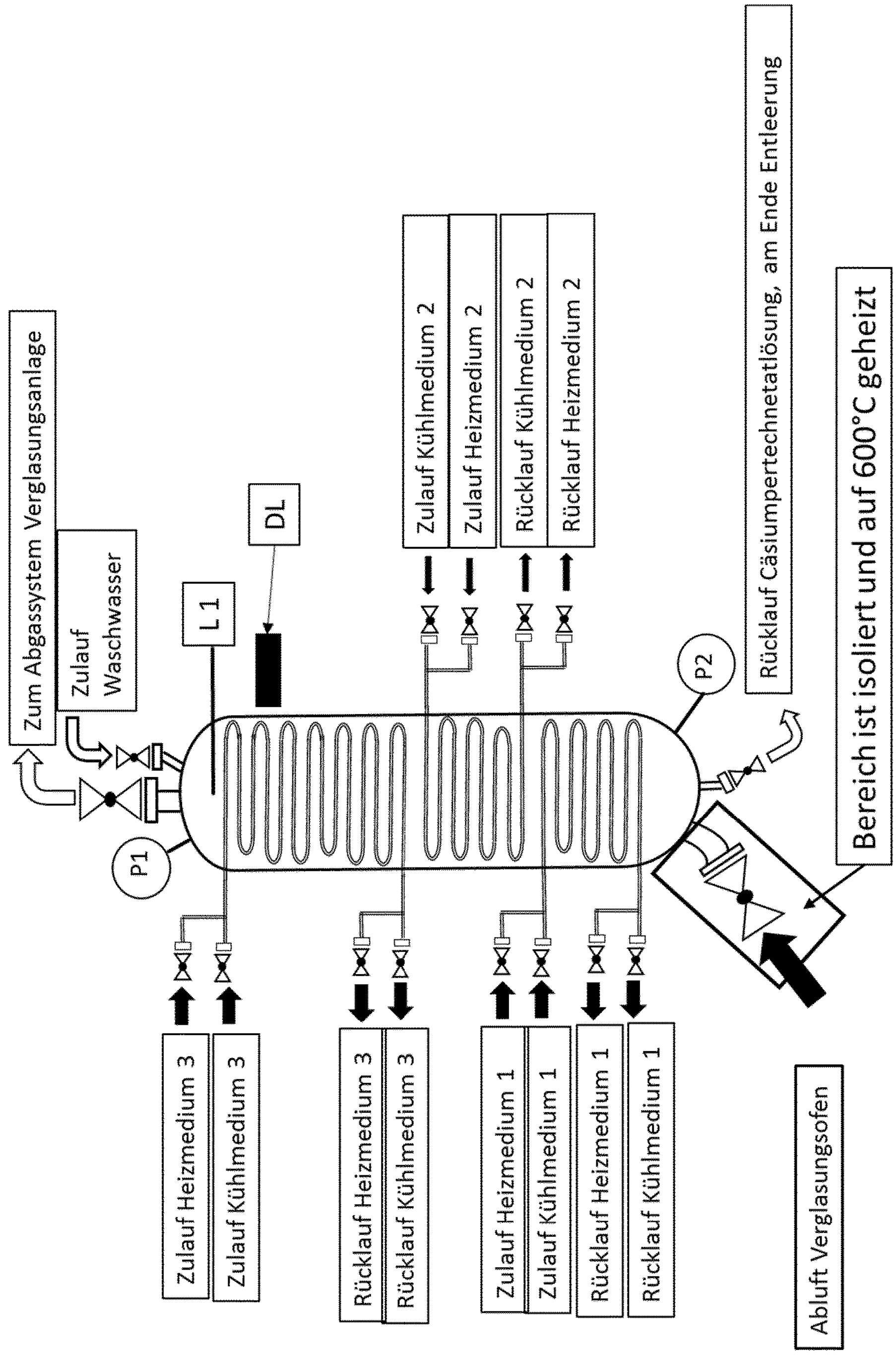
Zum Abgassystem Verglasungsanlage
Zulauf Waschwasser
L 1
DL
Zulauf Kühlmedium 2
Zulauf Heizmedium 2
Rücklauf Kühlmedium 2
Rücklauf Heizmedium 2
Rücklauf Cäsiumpertechnetatlösung, am Ende Entleerung
P1
P2
Bereich ist isoliert und auf 600°C geheizt
Zulauf Heizmedium 3
Zulauf Kühlmedium 3
Rücklauf Heizmedium 3
Rücklauf Kühlmedium 3
Zulauf Heizmedium 1
Zulauf Kühlmedium 1
Rücklauf Heizmedium 1
Rücklauf Kühlmedium 1
Abluft Verglasungsofen

Figur 2:

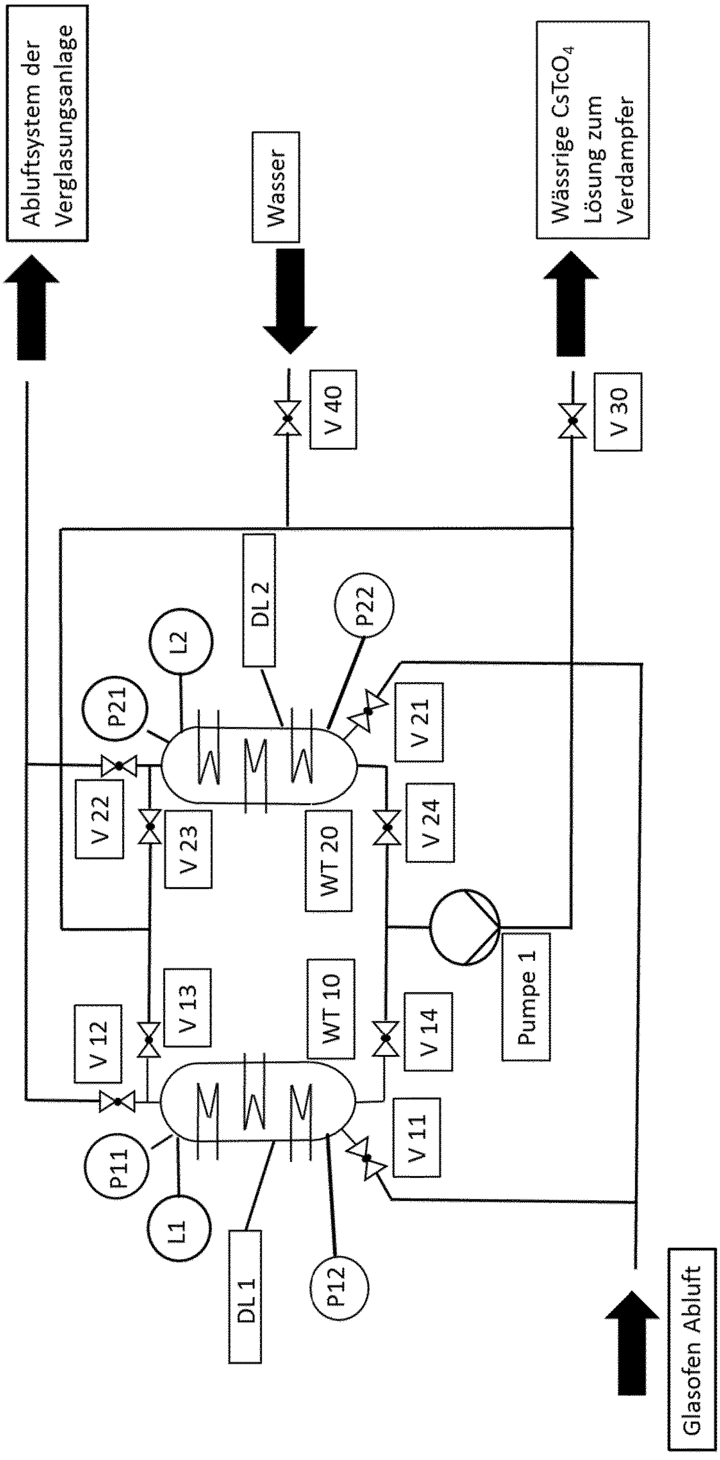
Abluftsystem der Verglasungsanlage
Wasser
Wässrige $CsTcO_4$ Lösung zum Verdampfer
V 40
V 30
DL 2
L2
P21
P22
V 21
V 22
V 23
V 24
WT 20
WT 10
V 12
V 13
V 14
Pumpe 1
V 11
P11
L1
DL 1
P12
Glasofen Abluft

Figur 3:

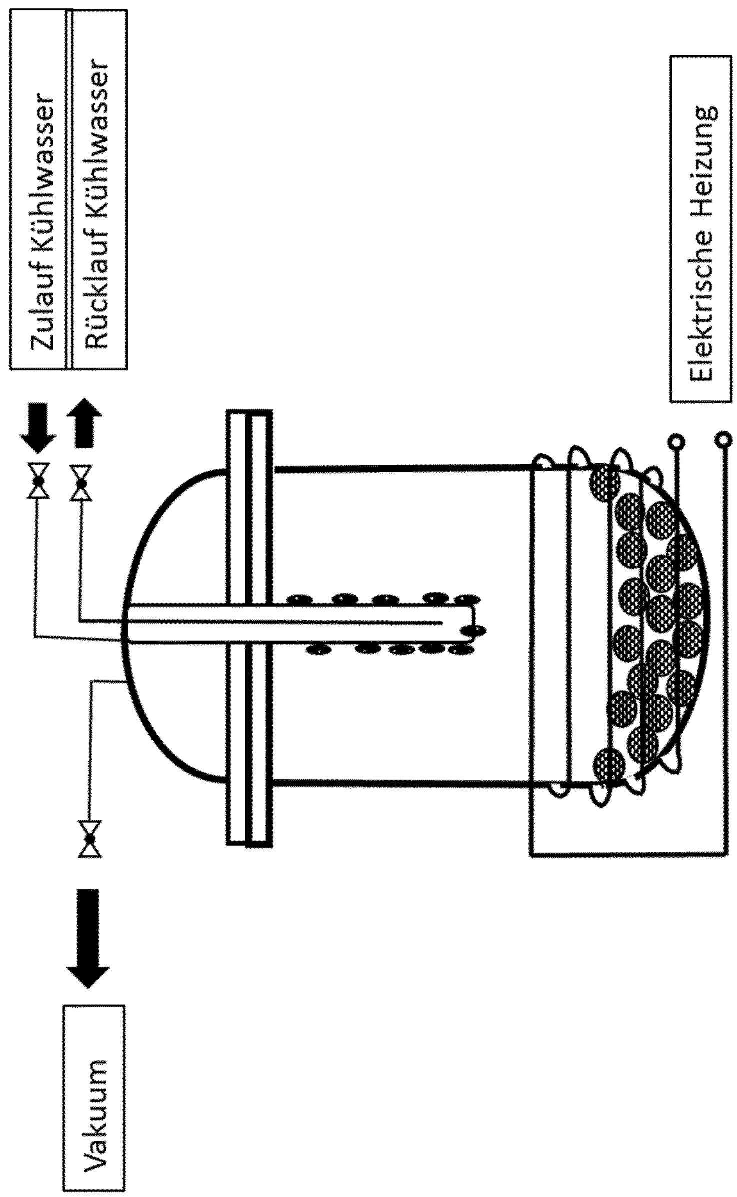
Zulauf Kühlwasser
Rücklauf Kühlwasser
Elektrische Heizung
Vakuum

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2609223
- WO 9737995 A
- WO 0195342 A
- US 5185104 A